# EUROPÄISCHE PATENTSCHRIFT

(11) **EP 3 566 887 B1**
(45) Veröffentlichungstag und Bekanntmachung des Hinweises auf die Patenterteilung: **20.01.2021**
(21) Anmeldenummer: 19167724.4
(22) Anmeldetag: 08.04.2019
(51) Int. Cl.: B60C 23/04

(54) **VERFAHREN ZUM AUTOMATISIERTEN ZUORDNEN VON REIFENMODULEN ZU REIFENPOSITIONEN EINES FAHRZEUGES**
METHOD FOR AUTOMATICALLY ALLOCATING TYRE POSITIONS OF A VEHICLE
MÉTHODE DE POSITIONNEMENT AUTOMATIQUE DES PNEUMATIQUES D'UN VÉHICULE

(30) Priorität: 07.05.2018 DE 102018207040
(43) Veröffentlichungstag der Anmeldung: 13.11.2019
(73) Patentinhaber: Continental Reifen Deutschland GmbH, 30165 Hannover (DE)
(72) Erfinder: Sahlmüller, Baldo, 30165 Hannover (DE); Lehmann, Jörg, 30165 Hannover (DE)
(74) Vertreter: Widjaja, Wira

(56) Entgegenhaltungen:
- WO-A1-2012/045917
- US-A1- 2014 007 683

## Beschreibung

Die Erfindung betrifft ein Verfahren zum automatisierten Zuordnen von Reifenmodulen zu Reifenpositionen eines Fahrzeuges.

Zur Überwachung von Reifenzuständen, insbesondere einem Reifendruck, von Reifen eines Nutzfahrzeuges sind Reifen-Sensor-Module bzw. Reifenmodule bekannt, die beispielsweise im Inneren eines Reifens angeordnet sind. Derartige Reifen-Sensor-Module sind ausgebildet, positionsgebunden einen Reifendruck zu erfassen, zu verarbeiten und an ein elektronisches Steuergerät (ECU) eines Überwachungssystems zu übertragen. Das Steuergerät nimmt das Datentelegramm über ein Empfangsmodul des Überwachungssystems auf und gibt in Abhängigkeit von Grenzwerten ein Warnsignal an den Fahrer aus, beispielsweise wenn an einem der Reifen ein Reifendruck unterhalb eines Grenzwertes festgestellt wurde. Ein Beispiel für ein solches Reifen-Sensor-Modul offenbart die DE 102 43 441 A1 Das Dokument US2014/007683 zeigt ein System mit einem Beschleunigungssensor zum Ermitteln einer radialen Beschleunigung, der im Reifenmantel integriert ist.

Bei einem Reifenwechsel von einem Fahrzeug kann es vorkommen, dass beispielsweise nur die Vorderreifen ausgetauscht werden und die neuen Reifen mit neuen Reifenmodulen bestückt werden.

Anschließend muss dann sichergestellt werden, dass eine Systemeinheit im Fahrzeug erkennt, dass die neuen Reifenmodule zum Fahrzeug gehören und auf welcher Reifenposition sie sich befinden.

Der Erfindung liegt daher die Aufgabe zugrunde, ein Verfahren bereitzustellen, mit dem eine automatisierte Zuordnung von Reifenmodulen zu bestimmten Reifenpositionen am Fahrzeug ermöglicht werden kann.

Gelöst wird die Aufgabe durch ein Verfahren mit den folgenden Schritten:
a) Erfassen, ob mindestens ein Reifenmodul zum Messen von Reifenzuständen in einem Überwachungsbereich vorhanden ist;
   wobei das Reifenmodul zumindestens einen Beschleunigungssensor zum Erfassen von radialen Beschleunigungswerten umfasst,
b) Ermitteln, ob das mindestens eine erfasste Reifenmodul unbekannt ist,
c) Auswerten von Datentelegrammen des mindestens einen erfassten und unbekannten Reifenmoduls,
   wobei die Datentelegramme zumindest Informationen zu gemessenen radialen Beschleunigungswerten des Reifenmoduls bei Kurvenfahrten des Fahrzeuges umfassen,
d) Ermitteln eines ersten Referenzwertes eines statisch radialen Beschleunigungswertes eines unbekannten Reifenmoduls bei einer Kurvenfahrt des Fahrzeuges,
e) Ermitteln eines zweiten Referenzwertes eines statisch radialen Beschleunigungswertes eines zweiten unbekannten Reifenmoduls oder eines zweiten bekannten Reifenmoduls bei der Kurvenfahrt des Fahrzeuges,
f) Vergleich des erstem Referenzwertes mit dem zweiten Referenzwert,
   wobei bei einer signifikanten numerischen Differenz von beiden Referenzwerten ermittelt wird,
   ob das unbekannte Reifenmodul an einem Fahrzeugreifen einer linken oder einer rechten Fahrzeugseite montiert ist,
   wobei das Reifenmodul mit der kleineren statisch radialen Beschleunigung einer kurveninneren Fahrzeugseite zugeordnet wird,
g) Automatisiertes Zuordnen des mindestens einen unbekannten Reifenmoduls zu einer bestimmten Reifenposition auf einer linken oder rechten Fahrzeugseite des Fahrzeuges.

Ein Vorteil des Verfahrens besteht darin, dass mit dem Verfahren eine automatisierte Zuordnung von Reifenmodulen zu bestimmten Reifenpositionen am Fahrzeug erfolgen kann.

Es ist daher nicht mehr erforderlich, eine manuelle Zuordnung von Reifenmodulen zu bestimmten Reifenpositionen mit einer Auswcrtccinhcit im Fahrzeug vorzunehmen. Durch das automatisierte Verfahren wird während der Fahrt des Fahrzeuges auf einfache Weise festgestellt, ob neue Reifenmodule im Fahrzeugreifen montiert sind. Anschließend wird über die Auswertung von Datentelegrammen automatisiert festgestellt, auf welcher Fahrzeugseite sich die unbekannten Reifenmodule befinden müssen. Unter bestimmten Randbedingungen ist es dann ebenfalls möglich, die neuen Reifenmodule bestimmten Reifenpositionen auf der rechten oder linken Fahrzeugseite zuzuordnen.

In einer vorteilhaften Weiterbildung der Erfindung ist vorgesehen, dass bei den Schritten d) und e) der Referenzwert aus einem Mittelwert von mindestens 5 Kurvenfahrten gebildet wird.

Durch diese Mittelwertbildung lassen sich einzelne unbekannte Reifenmodule mit einer hohen Sicherheit entweder der linken oder rechten Fahrzeugseite zuordnen.

In einer weiteren vorteilhaften Weiterbildung der Erfindung ist vorgesehen, dass bei den Schritten d) und e) die Kurvenfahrt mit einem Sensor zur Erkennung eines Lenkradeinschlages detektiert und bei der Messung des statisch radialen Beschleunigungswertes berücksichtigt wird.

Der Lenkradeinschlag lässt sich einfach mit Sensoren detektieren.

Außerdem lässt sich mit einem Zeitsignal das entsprechende Datentelegramm von dem unbekannten Reifenmodul mit einer Rechts- oder Linkskurve in Verbindung setzen.

In einer weiteren vorteilhaften Weiterbildung der Erfindung ist vorgesehen, dass bei den Schritten d) und e) die Kurvenfahrt mit einem Beschleunigungssensor zur Messung einer Querbeschleunigung detektiert und bei der Messung des statisch radialen Beschleunigungswertes berücksichtigt wird.

Mit einem solchen Beschleunigungssensor lässt sich einfach feststellen, ob das Fahrzeug eine Linkskurve oder eine Rechtskurve fährt.

In einer weiteren vorteilhaften Weiterbildung der Erfindung ist vorgesehen, dass der Beschleunigungssensor zur Messung der Querbeschleunigung im Reifenmodul integriert ist.

Dadurch lässt sich die Auswertung der Messdaten direkt im Reifenmodul durchführen.

In einer weiteren vorteilhaften Weiterbildung der Erfindung ist vorgesehen, dass zumindestens bei Schritt f) die Referenzwerte von Reifenmodulen miteinander verglichen werden, die auf einer Fahrzeugachse des Fahrzeuges angeordnet sind.

Dadurch lässt sich das unbekannte Reifenmodul direkt der linken oder der rechten Reifenposition auf der Fahrzeugachse zuweisen.

Anhand eines Ausführungsbeispiels soll die Erfindung näher erläutert werden. Es zeigen:
- Fig. 1:: ein Fahrzeug in der Aufsicht
- Fig. 2:: die Vorderachse mit zwei Fahrzeugreifen bei einer Linkskurve.

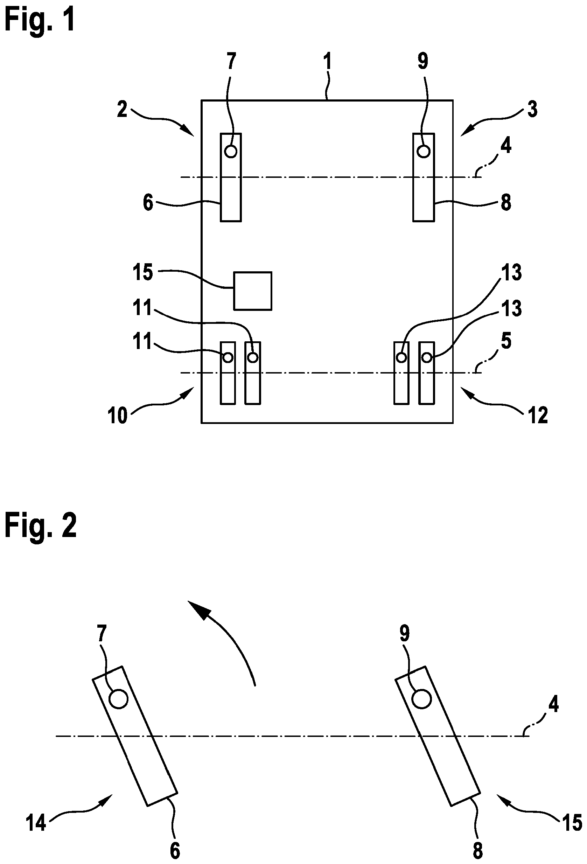

Die Fig. 1 zeigt ein Ausführungsbeispiel.

Die Fig. 1 zeigt schematisch ein Fahrzeug 1 mit einer Vorderachse 4 und einer Hinterachse 5. Bei dem Fahrzeug handelt es sich um eine LKW-Zugmaschine. Auf der Hinterachse 5 sind vier Fahrzeugreifen montiert.

Auf der linken Fahrzeugseite 2 sind an der Hinterachse 5 zwei linke Fahrzeugreifen 10 montiert.

Gegenüberliegend sind an der Hinterachse 5 zwei rechte Fahrzeugreifen 12 montiert.

Alle vier Fahrzeugreifen sind mit jeweils zwei bekannten linken Reifenmodulen 11 und zwei bekannten rechten Reifenmodulen 13 bestückt. Die Reifenmodule 11 und 13 wurden z. B. bei einem vorangegangenen Werkstattaufenthalt nicht ausgetauscht. Bei dem vorangegangenen Werkstattaufenthalt wurden hingegen an der Vorderachse 4 die Fahrzeugreifen 6 und 8 ausgewechselt.

Die ausgewechselten Reifen wurden dabei mit neuen Reifenmodulen 7 und 9 bestückt. Nachdem das Fahrzeug die Werkstatt verlassen hat, erkennt die Auswerteeinheit 15 zwei neue unbekannte Reifenmodule 7 und 9.

Anschließend wird mit einem Algorithmus erkannt, dass diese neuen Reifenmodule zum Fahrzeug gehören.

Um die neuen Reifenmodule 7 und 9 einer bestimmten Reifenposition am Fahrzeug zuzuordnen, werden die Datentelegramme, die von den Reifenmodulen gesendet werden, ausgewertet.

In den Reifenmodulen sind jeweils Beschleunigungssensoren angeordnet, die eine Beschleunigung in radialer Richtung des Fahrzeugreifens messen.

Als Referenzwert wird jeweils der statisch radiale Beschleunigungswert ermittelt.

Bei dem statisch radialen Beschleunigungswert handelt es sich um den Beschleunigungswert, bei dem das Reifenmodul sich während der Fahrt nicht in der Bodenaufstandsfläche des Fahrzeugreifens befindet.

Bei einer Kurvenfahrt des Fahrzeuges 1 unterscheiden sich die radialen Beschleunigungswerte von dem linken unbekannten Reifenmodul und dem rechten unbekannten Reifenmodul signifikant.

Bei einer Kurvenfahrt nach links, wie sie in der Figur 1 dargestellt ist, ist der radiale Beschleunigungswert kleiner als bei dem rechten unbekannten Reifenmodul 9.

Das liegt u.a. daran, dass der linke Fahrzeugreifen bei einer Linkskurve eine geringere Strecke zurücklegt, als der rechte Fahrzeugreifen.

Die Datentelegramme der unbekannten Reifenmodule 8 und 9 umfassen insbesondere die gemessenen und gemittelten statisch radialen Beschleunigungswerte.

Die Auswerteeinheit 15 wertet anschließend die empfangenen Daten aus und kann dann mit einem Rechenalgorithmus feststellen, ob das unbekannte Reifenmodul auf der linken Fahrzeugseite oder auf der rechten Fahrzeugseite montiert ist.

Die Figur 2 zeigt die Vorderachse 4 mit dem linken und dem rechten Fahrzeugreifen 6 und 8.

Das Fahrzeug fährt, wie dargestellt, eine Linkskurve.

Das Reifenmodul 7 befindet sich somit auf der kurveninneren Fahrzeugseite 14. Der statische radiale Beschleunigungswert des unbekannten Reifenmoduls 7 ist kleiner als der statisch radiale Beschleunigungswert des Reifenmoduls 9.

Durch eine entsprechende Auswertung mit der Auswerteeinheit 15 lässt sich somit die Aussage treffen, dass das unbekannte Reifenmodul 7 sich auf der linken Fahrzeugseite befindet.

Aufgrund des größeren radialen Beschleunigungswertes lässt sich ebenfalls die Aussage treffen, dass das unbekannte Reifenmodul 9 sich auf der rechten Fahrzeugseite 3 befindet. Durch dieses automatisierte Zuordnungsverfahren lässt sich somit auf einfache Weise feststellen, auf welcher Seite des Fahrzeuges die unbekannten Reifenmodule montiert sind.

### Bezugszeichenliste

- 1: Fahrzeug oder LKW-Zugmaschine
- 2: Linke Fahrzeugseite
- 3: Rechte Fahrzeugseite
- 4: Vorderachse
- 5: Hinterachse
- 6: Linker Fahrzeugreifen auf der Vorderachse
- 7: Unbekanntes linkes Reifenmodul (z.B. aufgrund Reifenwechsel)
- 8: Rechter Fahrzeugreifen auf der Vorderachse
- 9: Unbekanntes rechtes Reifenmodul (z.B. aufgrund Reifenwechsel)
- 10: 2 Linke Fahrzeugreifen auf der Hinterachse
- 11: Bekannte linke Reifenmodule
- 12: 2 Rechte Fahrzeugreifen auf der Hinterachse
- 13: Bekannte rechte Reifenmodule
- 14: Kurveninnere Fahrzeugseite bei einer Linkskurve
- 15: Auswerteeinheit im Fahrzeug

## Patentansprüche

1. Verfahren zum automatisierten Zuordnen von Reifenmodulen zu Reifenpositionen eines Fahrzeuges (1),
mit mindestens den folgenden Schritten,
a) Erfassen, ob mindestens ein Reifenmodul (7,9) zum Messen von Reifenzuständen in einem Überwachungsbereich vorhanden ist;
wobei das Reifenmodul (7,9) zumindestens einen Beschleunigungssensor zum Erfassen von radialen Beschleunigungswerten umfasst,
b) Ermitteln, ob das mindestens eine erfasste Reifenmodul (7,9) unbekannt ist,
c) Auswerten von Datentelegrammen des mindestens einen erfassten und unbekannten Reifenmoduls (7,9),
wobei die Datentelegramme zumindest Informationen zu gemessenen radialen Beschleunigungswerten des Reifenmoduls (7,9) bei Kurvenfahrten des Fahrzeuges (1) umfassen,
d) Ermitteln eines ersten Referenzwertes eines statisch radialen Beschleunigungswertes eines unbekannten Reifenmoduls (7,9) bei einer Kurvenfahrt des Fahrzeuges (1),
e) Ermitteln eines zweiten Referenzwertes eines statisch radialen Beschleunigungswertes eines zweiten unbekannten Reifenmoduls (7,9) oder eines zweiten bekannten Reifenmoduls (11,13) bei der Kurvenfahrt des Fahrzeuges (1),
f) Vergleich des erstem Referenzwertes mit dem zweiten Referenzwert,
wobei bei einer signifikanten numerischen Differenz von beiden Referenzwerten ermittelt wird,
ob das unbekannte Reifenmodul (7,9) an einem Fahrzeugreifen einer linken oder einer rechten Fahrzeugseite (2,3) montiert ist,
wobei das Reifenmodul (7,9) mit der kleineren statisch radialen Beschleunigung einer kurveninneren Fahrzeugseite (14) zugeordnet wird,
g) Automatisiertes Zuordnen des mindestens einen unbekannten Reifenmoduls (7,9) zu einer bestimmten Reifenposition auf einer linken oder rechten Fahrzeugseite (2,3) des Fahrzeuges.

2. Verfahren nach Anspruch 1,
**dadurch gekennzeichnet, dass**
bei den Schritten d) und e) der Referenzwert aus einem Mittelwert von mindestens 5 Kurvenfahrten gebildet wird.

3. Verfahren nach einem der vorhergehenden Ansprüche,
**dadurch gekennzeichnet, dass**
bei den Schritten d) und e) die Kurvenfahrt mit einem Sensor zur Erkennung eines Lenkradeinschlages detektiert und bei der Messung des statisch radialen Beschleunigungswertes berücksichtigt wird.

4. Verfahren nach einem der vorhergehenden Ansprüche,
**dadurch gekennzeichnet, dass**
bei den Schritten d) und e) die Kurvenfahrt mit eine Beschleunigungssensor zur Messung einer Querbeschleunigung detektiert und bei der Messung des statisch radialen Beschleunigungswertes berücksichtigt wird.

5. Verfahren nach einem der vorhergehenden Ansprüche,
**dadurch gekennzeichnet, dass**
der Beschleunigungssensor zur Messung der Querbeschleunigung im Reifenmodul (7,9,11,13) integriert ist.

6. Verfahren nach einem der vorhergehenden Ansprüche,
**dadurch gekennzeichnet, dass**
zumindestens bei Schritt f) die Referenzwerte von Reifenmodulen (7,9) miteinander verglichen werden, die auf einer Fahrzeugachse (4,5) des Fahrzeuges (1) angeordnet sind.

## Claims

1. Method for automatically assigning tyre modules to tyre positions of a vehicle (1),
comprising at least the following steps,
a) sensing whether at least one tyre module (7, 9) for measuring tyre conditions is present in a monitoring area;
wherein the tyre module (7, 9) comprises at least one acceleration sensor for sensing radial acceleration values,
b) determining whether the at least one sensed tyre module (7, 9) is unknown,
c) evaluating data messages of the at least one sensed, unknown tyre module (7, 9),
wherein the data messages comprise at least items of information in relation to measured radial acceleration values of the tyre module (7, 9) in cases where the vehicle (1) is driving around a bend,
d) determining a first reference value of a statically radial acceleration value of an unknown tyre module (7, 9) in a case where the vehicle (1) is driving around a bend,
e) determining a second reference value of a statically radial acceleration value of a second unknown tyre module (7, 9) or of a second known tyre module (11, 13) in a case where the vehicle (1) is driving around a bend,
f) comparing the first reference value with the second reference value,
wherein, in the case of a significant numerical difference between the two reference values, it is determined
whether the unknown tyre module (7, 9) is fitted on a vehicle tyre of a left or a right vehicle side (2, 3),
wherein the tyre module (7, 9) with the smaller statically radial acceleration is assigned to a vehicle side (14) on the inside of the bend,
g) automatically assigning the at least one unknown tyre module (7, 9) to a specific tyre position on a left or right vehicle side (2, 3) of the vehicle.

2. Method according to Claim 1,
**characterized in that**
in the case of steps d) and e), the reference value is formed from a mean value of at least 5 cases of driving around a bend.

3. Method according to one of the preceding claims,
**characterized in that**
in the case of steps d) and e), the driving around a bend is detected by a sensor for detecting a steering wheel lock and is taken into account when measuring the statically radial acceleration value.

4. Method according to one of the preceding claims,
**characterized in that**
in the case of steps d) and e), the driving around a bend is detected by an acceleration sensor for measuring a transverse acceleration and is taken into account when measuring the statically radial acceleration value.

5. Method according to one of the preceding claims, **characterized in that**
the acceleration sensor for measuring the transverse acceleration is integrated in the tyre module (7, 9, 11, 13).

6. Method according to one of the preceding claims,
**characterized in that**
at least in the case of step f), the reference values of tyre modules (7, 9) that are arranged on one vehicle axle (4, 5) of the vehicle (1) are compared with one another.

## Revendications

1. Procédé permettant d'associer automatiquement des modules de pneu à des positions de pneu d'un véhicule (1) ,
comprenant au moins les étapes suivantes consistant à
a) détecter s'il existe au moins un module de pneu (7, 9) pour mesurer des états de pneu dans une zone de surveillance ;
le module de pneu (7, 9) comprenant au moins un capteur d'accélération pour détecter des valeurs d'accélération radiale,
b) déterminer si ledit au moins un module de pneu (7, 9) détecté est inconnu,
c) évaluer des télégrammes de données dudit au moins un module de pneu (7, 9) détecté et inconnu,
les télégrammes de données comprenant au moins des informations concernant des valeurs d'accélération radiale mesurées du module de pneu (7, 9) lorsque le véhicule (1) négocie un virage,
d) déterminer une première valeur de référence d'une valeur d'accélération statique radiale d'un module de pneu (7, 9) inconnu lorsque le véhicule (1) négocie un virage,
e) déterminer une deuxième valeur de référence d'une valeur d'accélération statique radiale d'un deuxième module de pneu (7, 9) inconnu ou d'un deuxième module de pneu (11, 13) connu lorsque le véhicule (1) négocie un virage,
f) comparer la première valeur de référence à la deuxième valeur de référence,
dans lequel, en cas de différence numérique significative entre les deux valeurs de référence, il est déterminé si le module de pneu (7, 9) inconnu est monté sur un pneu de véhicule sur un côté de véhicule gauche ou droit (2, 3),
le module de pneu (7, 9) ayant l'accélération statique radiale inférieure étant associé à un côté de véhicule (14) à l'intérieur du virage,
g) associer automatiquement ledit au moins un module de pneu (7, 9) inconnu à une certaine position de pneu sur un côté de véhicule gauche ou droit (2, 3) du véhicule.

2. Procédé selon la revendication 1, **caractérisé en ce qu'**aux étapes d) et e) , la valeur de référence est formée à partir d'une moyenne d'au moins 5 virages.

3. Procédé selon l'une quelconque des revendications précédentes, **caractérisé en ce qu'**aux étapes d) et e), le virage est détecté par un capteur pour reconnaître un braquage du volant et est pris en compte lors de la mesure de la valeur d'accélération statique radiale.

4. Procédé selon l'une quelconque des revendications précédentes, **caractérisé en ce qu'**aux étapes d) et e), le virage est détecté par un capteur d'accélération pour mesurer une accélération transversale et est pris en compte lors de la mesure de la valeur d'accélération statique radiale.

5. Procédé selon l'une quelconque des revendications précédentes, **caractérisé en ce que** le capteur d'accélération pour mesurer l'accélération transversale est intégré dans le module de pneu (7, 9, 11, 13).

6. Procédé selon l'une quelconque des revendications précédentes, **caractérisé en ce qu'**au moins à l'étape f), les valeurs de référence des modules de pneu (7, 9) qui sont disposés sur un essieu de véhicule (4, 5) du véhicule (1) sont comparées les unes aux autres.
